# FASCICULE DE BREVET EUROPEEN

(11) **EP 2 585 877 B1**
(45) Date de publication et mention de la délivrance du brevet: **02.01.2019**
(21) Numéro de dépôt: 11727974.5
(22) Date de dépôt: 22.06.2011
(51) Int. Cl.: B21D 39/00, B23P 6/00, G04D 3/00, G04B 13/02, G04B 15/14

(54) **PROCEDE DE FABRICATION D'UN COMPOSANT HORLOGER COMPRENANT AU MOINS DEUX PIECES**
VERFAHREN ZUR HERSTELLUNG EINER ZUMINDEST ZWEITEILIGEN KOMPONENTE ZUR FERTIGUNG EINER UHR
METHOD FOR PRODUCING A WATCHMAKING COMPONENT COMPRISING AT LEAST TWO PARTS

(30) Priorité: 22.06.2010 CH 10222010; 22.06.2010 CH 10202010
(43) Date de publication de la demande: 01.05.2013
(73) Titulaire: The Swatch Group Research and Development Ltd., 2074 Marin (CH)
(72) Inventeur: WINKLER, Yves, CH-3185 Schmitten (CH); BOURBAN, Stewes, 1589 Chabrey (CH); DUBACH, Alban, 2502 Biel (CH)
(74) Mandataire: Giraud, Eric
(86) Numéro de dépôt international: PCT/EP2011/060510
(87) Numéro de publication internationale: WO 2011/161192

(56) Documents cités:
- EP-A1- 2 138 323
- EP-A1- 2 180 385
- EP-A1- 2 317 406
- US-A1- 2009 196 125

## Description

La présente invention concerne un procédé d'assemblage d'un dispositif comprenant une première pièce et au moins une seconde pièce, ladite première pièce et ladite au moins une seconde pièce étant agencées pour pourvoir s'assembler.

Le domaine technique de l'invention est le domaine de la mécanique fine.

### ARRIERE PLAN TECHNOLOGIQUE

Il existe de nombreux dispositifs qui nécessitent un procédé de fabrication de grande précision comme par exemple, dans les domaines microtechniques telle que l'horlogerie. En effet, le monde de l'horlogerie travaille avec des dimensions allant du millimètre au dixième de millimètre. Parmi les exemples de dispositifs dont la précision est importante, on trouve les rouages ou encore l'échappement. L'échappement est constitué d'une ancre et d'une roue d'échappement coopérant ensemble, la rotation de la roue d'échappement étant régulée par l'ancre du système d'échappement dont les impulsions sont fournies par un balancier spiral. Les impulsions sont donc importantes. Or, ces impulsions sont réalisées par des palettes insérées dans l'ancre et qui entrent en contact avec la roue d'échappement. Or, si les palettes de l'ancre ne sont pas bien positionnées, les impulsions entre les palettes de l'ancre et la roue d'échappement ne sont pas parfaites et des pertes apparaissent affectant ainsi l'efficacité de l'échappement et donc la précision et l'autonomie de la montre.

Actuellement, l'assemblage des palettes sur une ancre se fait en utilisant une gomme laque, qui est un produit naturel présentant les propriétés des thermoplastiques. La viscosité est difficilement contrôlable sur ce type de matière et il est difficile de contrôler le volume de colle déposée; il arrive donc souvent que la gomme déborde ce qui entraîne des défauts esthétiques qui peuvent être inacceptables. En outre, la gomme laque est un matériau organique qui est sujet au vieillissement et par conséquent, la fixation de la palette peut se fragiliser avec le temps.

Une autre possibilité est d'utiliser le brasage ou le soudage. Néanmoins, ces deux solutions sont également problématiques car pour avoir une chance de souder un matériau céramique ou silicium ou minéral, il faut avoir recours à la brasure/soudure réactive qui doit être réalisée à relativement haute température (généralement supérieure 700°C) et sous atmosphère neutre ou sous vide poussé. Ceci engendre des cycles d'assemblages très longs et des ruptures/fissurations du matériau sont possibles.

Il existe également des dispositifs qui réclament non seulement une grande précision mais aussi un procédé de fabrication qui ne soit pas brutal pour les pièces les composant. On citera en particulier le silicium qui est un matériau de plus en plus utilisé notamment dans l'horlogerie. Ce matériau, qui n'a pas de domaine plastique exploitable, est utilisé pour réaliser des roues d'engrenages ou des ancres de système d'échappement mais a pour inconvénient d'être très fragile. Or, actuellement, il n'existe pas de procédé autre que le collage pour fixer une roue en silicium sur un axe. Le collage a notamment pour désavantages d'être peu reproductible, de générer des composés organiques pouvant dégrader les huiles et de se fragiliser avec le temps.

Le document EP2138323 divulgue un procédé de fixation d'un élément décoratif en métal amorphe.

Le document EP2317406 divulgue un procédé de fixation entre deux éléments fonctionnels dont un au moins un est en matériau cassant à l'aide d'un métal amorphe.

### RESUME DE L'INVENTION

L'invention a pour but de pallier les inconvénients de l'art antérieur en proposant de fournir un procédé de fabrication simple, précis et qui permet de fixer sans risques des pièces en matériaux dont le domaine plastique n'est pas exploitable.

A cet effet, l'invention concerne le procédé de fabrication défini par les revendications annexées.

Un premier avantage de la présente invention est de permettre un assemblage simple des palettes à l'ancre. En effet, le métal amorphe permet l'utilisation de procédés simples et peu coûteux pour sa mise en forme tel que le formage à chaud ou la coulée qui ne nécessitent pas d'outillages complexes et coûteux.

Un autre avantage est que la présente invention permet une fixation efficace. En effet, les métaux amorphes ont la capacité de se ramollir fortement lorsqu'ils sont chauffés à une température comprise entre leur température de transition vitreuse et leur température de cristallisation. Dans cet intervalle de température, ces métaux amorphes ont une viscosité qui diminue fortement, la diminution de la viscosité étant dépendante de la température : plus la température est élevée, plus la viscosité diminue. Cette viscosité permet au métal amorphe de s'insérer dans tous les recoins d'un moule et ainsi d'améliorer la fixation tout en ayant une pièce précise.

Un autre avantage de ce procédé est qu'il permet un réglage ultérieur. En effet, le fait d'avoir un joint en métal amorphe autorise un réglage ultérieur en profitant des propriétés de mise en forme du métal amorphe. Comme ce dernier peut se ramollir lorsqu'il est chauffé à une température comprise entre sa température de transition vitreuse Tg et sa température de cristallisation Tx, il permet alors de modifier la position des palettes sans rompre l'assemblage des palettes et de l'ancre.

Des modes de réalisation avantageux de ce procédé font l'objet des revendications dépendantes.

Dans un premier mode de réalisation avantageux, ledit alliage métallique est soumis à une montée en température au dessus de sa température de fusion lui permettant de perdre localement toute structure cristalline, ladite montée étant suivie d'un refroidissement à une température inférieure à sa température de transition vitreuse permettant audit matériau de devenir au moins partiellement amorphe.

Dans un second mode de réalisation avantageux, l'étape de mise en forme consiste à mettre en forme ledit alliage métallique seulement après l'avoir au préalable transformé en une préforme au moins partiellement amorphe, ladite préforme étant ensuite soumise à une température comprise entre la température de transition vitreuse et la température de cristallisation du matériau puis à une opération de formage par pression suivie d'une opération de refroidissement permettant audit matériau de garder une nature au moins partiellement amorphe.

Dans un troisième mode de réalisation avantageux, l'étape de mise en forme est simultanée avec un traitement rendant ledit alliage métallique au moins partiellement amorphe, en le soumettant à une température supérieure à sa température de fusion suivie d'un refroidissement à une température inférieure à sa température de transition vitreuse lui permettant de devenir au moins partiellement amorphe, lors d'une opération de coulée.

A cet effet, l'invention concerne le procédé d'assemblage d'un dispositif comprenant une première pièce et au moins une seconde pièce, ladite première pièce et ladite au moins une seconde pièce étant agencés pour pourvoir s'assembler. Ledit procédé se caractérise en ce que ledit procédé comprend en outre les étapes suivantes :
- se munir de la première et de la au moins une seconde pièce
- se munir d'un alliage métallique choisi apte à devenir au moins partiellement amorphe;
- transformer ledit alliage métallique de sorte à obtenir une préforme au moins partiellement amorphe ;
- placer ladite préforme sur ladite première pièce ;
- chauffer ladite préforme jusqu'à une température comprise entre la température de transition vitreuse et la température de cristallisation du matériau;
- assembler ladite au moins une seconde pièce et ladite première pièce de sorte que, ladite au moins une seconde pièce exerce une pression sur la préforme afin que celle-ci remplisse l'interstice créé entre ladite au moins une seconde pièce et ladite première pièce lors de ladite étape d'assemblage, et que ladite au moins une seconde pièce et ladite première pièce soient solidarisées entre elles formant ainsi ledit dispositif.

Dans un premier mode de réalisation avantageux, le procédé comprend en outre une étape de cristallisation dudit alliage métallique consistant à chauffer ledit matériau à une température comprise entre sa température de transition vitreuse et sa température de fusion suivi d'un refroidissement permettant de rendre ledit matériau au moins partiellement cristallin.

Dans un second mode de réalisation avantageux, la première pièce et/ou la seconde pièce sont réalisées dans un matériau qui n'a pas de domaine plastique exploitable.

Dans un troisième mode de réalisation avantageux, ledit m alliage métallique est totalement amorphe.

Dans un quatrième mode de réalisation avantageux, ledit alliage métallique comprend au moins un élément métallique du type précieux et est choisi dans le groupe formé par l'or, le platine, le palladium, le rhénium, le ruthénium, le rhodium, l'argent, l'iridium ou l'osmium.

Dans un autre mode de réalisation avantageux, ladite première pièce ou ladite au moins une seconde pièce comprend des reliefs de sorte à améliorer la solidarisation entre ladite première pièce et ladite au moins une seconde pièce.

Dans un autre mode de réalisation avantageux, ladite première pièce et ladite au moins une seconde pièce comprend des reliefs de sorte à améliorer la solidarisation entre ladite première pièce et ladite au moins une seconde pièce.

Dans un autre mode de réalisation avantageux, ladite première pièce est une ancre et en ce que ladite au moins une seconde pièce est une palette.

Dans un autre mode de réalisation avantageux, ladite première pièce est une roue et en ce que ladite au moins une seconde pièce est un axe.

Dans un autre mode de réalisation avantageux, la roue est en silicium

Dans un autre mode de réalisation avantageux, la roue est en céramique.

Dans un autre mode de réalisation avantageux, la roue est en composite céramique-métal (cermet).

### BREVE DESCRIPTION DES FIGURES

Les buts, avantages et caractéristiques du procédé selon la présente invention apparaîtront plus clairement dans la description détaillée suivante d'au moins une forme de réalisation de l'invention donnée uniquement à titre d'exemple non limitatif et illustrée par les dessins annexés sur lesquels :
- la figures 1 représente de manière schématique le dispositif utilisant le procédé selon la présente invention;
- les figures 2 à 7 représentent de manière schématique une première solution du premier mode de réalisation;
- les figures 8 à 11 représentent de manière schématique une seconde solution du premier mode de réalisation;
- les figures 12 à 19 représentent de manière schématique un second mode de réalisation du procédé selon la présente invention ;
- les figures 20 et 21 représentent de manière schématique une variante de l'invention.

### DESCRIPTION DETAILLEE

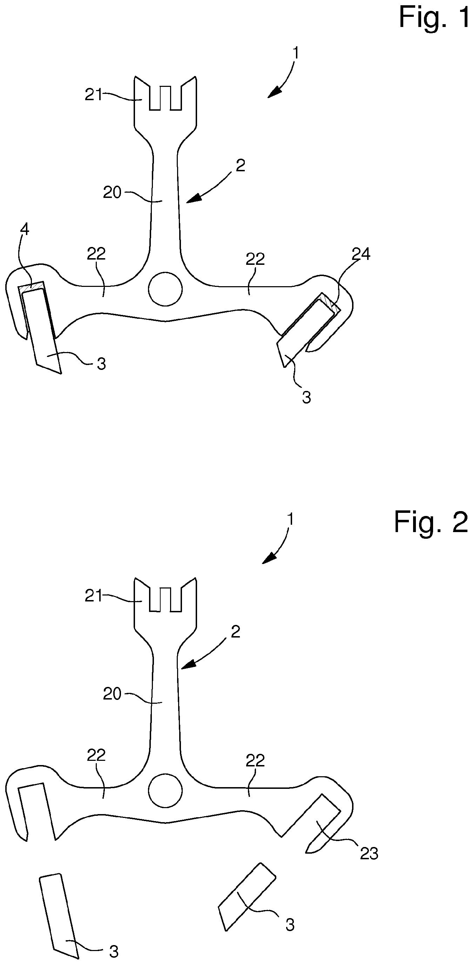

Sur la figure 1 est représenté un dispositif 1 comprenant une première pièce 2 et au moins une seconde pièce 3. Ce dispositif 1 peut être par exemple des parties d'un système d'échappement de pièce d'horlogerie. Ce système d'échappement est constitué d'une ancre 2 et d'une roue d'échappement coopérant ensembles. La rotation de cette dernière est régulée par l'ancre 2 du système d'échappement dont les impulsions sont fournies par un balancier spiral. L'ancre 2 est montée en pivotement sur un axe. Cette ancre 2 constitue la première pièce et se présente sous la forme d'une baguette 20 munie d'une fourchette 21, à une première extrémité, destinée à coopérer avec une cheville montée sur un plateau, et munie d'au moins deux bras 22, à une seconde extrémité. Cette ancre 2 est destinée à recevoir au moins une seconde pièce c'est à dire des palettes 3 afin de coopérer avec la roue d'échappement. L'ancre 2 est réalisée en un premier matériau alors que les palettes 3 sont réalisées en un second matériau. Lors de son fonctionnement, l'ancre 2 pivote sur son axe de sorte que les palettes 3 entrent en contact avec les dents de la roue d'échappement afin de réguler la rotation des rouages.

Les palettes 3 sont fixées à la baguette 20 de l'ancre 2 au niveau de logements 23 agencés sur chacun des deux bras 22. Ces logements 23 ont des dimensions calculées pour laisser apparaître un interstice 24 ou espace entre ledit bras 22 et ladite palette 3 lorsque cette dernière est insérée dans le logement 23. Cet interstice 24 est utilisé pour qu'un matériau formant un joint 4 puisse être agencé entre ledit bras et ladite palette.

L'assemblage des palettes 3 à l'ancre 2 par l'intermédiaire du joint 4 est réalisé en utilisant le procédé selon la présente invention.

Dans un premier mode de réalisation, le procédé de fabrication et d'assemblage, du dispositif 1 comprenant l'ancre 2 et les palettes 3, comprend une première étape consistant à se munir de la première pièce 2 et de la seconde pièce 3 c'est-à-dire de l'ancre 2 et des palettes 3 comme visible à la figure 2.

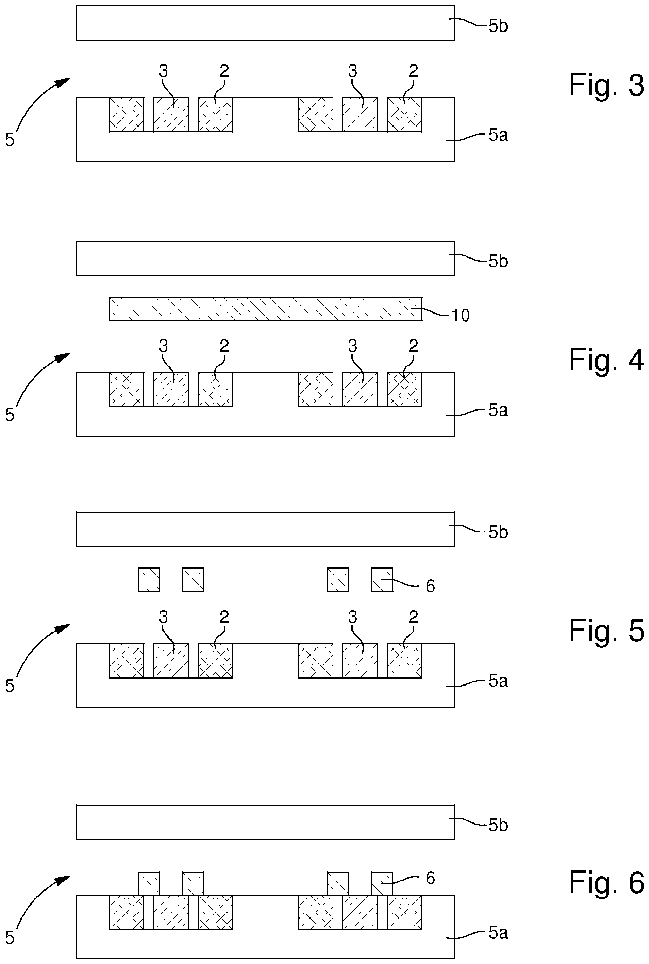

Puis une seconde étape consiste à placer ces premières 2 et secondes 3 pièces dans un négatif 5 dont l'empreinte correspond à celle du dispositif à réaliser; cela est représenté à la figure 3 montrant une vue en coupe des première 2 et secondes 3 pièces placées dans le négatif 5. Ces première 2 et secondes 3 pièces sont placées dans ce négatif 5 c'est-à-dire que les palettes 3 sont placées dans les logements 23 de l'ancre 2 de sorte qu'un interstice 24 soit présent entre chaque palette 3 et l'ancre 2. De préférence, les palettes 3 seront positionnées pour être dans leur position définitive.

Une troisième étape représentée à la figure 4 consiste à se munir du matériau formant le joint 4. Le joint 4 est réalisé en un métal ou alliage métallique au moins partiellement amorphe. Ce matériau pouvant être appelé matériau de fixation. Un élément de l'alliage peut être un élément métallique du type précieux tel que de l'or, du platine, du palladium, du rhénium, du ruthénium, du rhodium, de l'argent, de l'iridium ou de l'osmium. On comprendra par matériau au moins partiellement amorphe que le matériau est apte à se solidifier au moins partiellement en phase amorphe, c'est-à-dire qu'il est apte à éviter au moins partiellement toute cristallisation.

Dans une quatrième étape, le matériau est mis en forme pour assembler les palettes 3 et l'ancre 2.

Dans une première alternative représentée aux figures 5 à 8, la mise en forme du matériau est réalisée par formage à chaud. Ce procédé consiste en premier lieu à mettre en forme le matériau de sorte qu'il se présente sous la forme d'une préforme 6. Pour cela, le matériau est chauffé jusqu'à une température égale ou supérieure à sa température de fusion, ledit matériau devenant ainsi liquide. Il est ensuite coulé dans un moule de forme prédéfinie. Il est ensuite refroidi rapidement de sorte que les atomes composant ledit matériau ne puissent s'arranger pour former une structure. L'absence de structure permet audit matériau d'être amorphe. La forme de la préforme 6 est choisie pour être proche de la forme définitive. Par exemple, dans le cas de l'ancre 2 et des palettes 3, on considère que les logements 23 sont sensiblement parallélépipédiques. Les interstices entre les palettes 3 et l'ancre 2 ont donc sensiblement une forme de U. Dès lors, la forme de la préforme 6 est donc sensiblement celle d'un U. Dans le présent cas, on réalisera deux préformes 6, une pour chaque palette 3.

Une fois les préformes 6 réalisées, celles-ci sont posées sur l'ancre 2 et les palettes 3, qui sont placées dans le négatif 5, au niveau des interstices 24. Le négatif 5 comprend, dans cette alternative, deux matrices 5a et 5b. Le tout est ensuite chauffé jusqu'à une température comprise entre la température de transition vitreuse et la température de cristallisation du matériau. Dans cet intervalle, ledit matériau voit donc sa viscosité diminuer fortement de sorte qu'il devient facilement manipulable. Une faible contrainte de l'ordre de 1 MPa peut donc être appliquée audit matériau, par pression sur les matrices 5a et 5b, afin de le faire s'insérer dans les interstices afin de les remplir parfaitement. Cette faible contrainte est avantageuse dans le cas où l'ancre 2 et/ou les palettes 3 sont en matériaux fragiles, c'est-à-dire dans un matériau dont le domaine plastique n'est pas exploitable. Effectivement, dans ce cas, la contrainte est suffisamment faible pour empêcher l'ancre 2 et/ou les palettes 3 de se casser.

Une fois le métal amorphe dans les interstices 24, le tout est refroidi. Le refroidissement est opéré rapidement de sorte que les atomes n'aient pas le temps de se structurer permettant au matériau de rester sous forme amorphe. En effet, pour un matériau donné et à une température donnée entre sa température de transition vitreuse Tg et sa température de cristallisation Tx, il existe une durée limite au-delà de laquelle, ledit matériau cristallise. Cette durée diminue lorsque la température approche sa température de cristallisation Tx et cette durée augmente lorsque la température approche sa température de transition vitreuse Tg. Ainsi, le matériau amorphe va cristalliser si le temps passé à une température comprise entre Tg et Tx excède une certaine valeur spécifique pour chaque couple température/alliage. Typiquement pour l'alliage Zr41.2Ti13.8Cu12.5Ni10Be22.5 et pour une température de 440°C, le temps de pressage ne devra pas dépasser 120 secondes environ. Ainsi, le formage à chaud permet de conserver l'état au moins partiellement amorphe initial de la préforme.

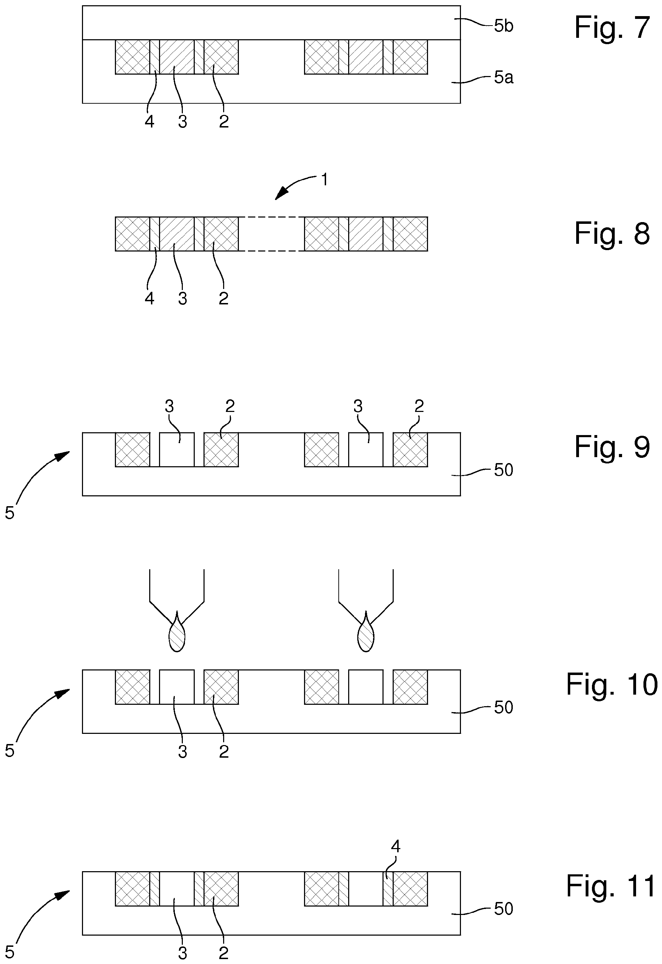

Une seconde alternative représentée aux figures 9 à 13 consiste à utiliser la coulée pour remplir les interstices 24 avec le matériau. Pour cela, le matériau, préalablement formé, est chauffé jusqu'à une température égale ou supérieure à sa température de fusion, ledit matériau devenant ainsi liquide. Il est ensuite par exemple coulé dans le négatif 5 comprenant un moule 50 dans lequel l'ancre 2 et les palettes 3 sont placées. Il est ensuite refroidi rapidement de sorte que les atomes composant ledit matériau ne puissent s'arranger pour former une structure. L'absence de structure permet audit matériau d'être amorphe. Un éventuel surplus de matière peut être enlevé par diverses techniques comme l'abrasion

L'avantage de la coulée d'un métal amorphe est de permettre une plus grande précision et une plus grande résistance de l'objet coulé. En effet, les métaux amorphes, lorsqu'ils sont coulés, ont l'avantage de présenter un retrait de solidification de moins de 1% alors que la coulée de leurs équivalents cristallins présente un retrait de solidification de 5 à 7%. Cela signifie que le matériau amorphe va garder la forme et les dimensions de l'endroit dans lequel il est coulé alors qu'un matériau cristallin va se contracter. Cela est avantageux car la jointure ne nécessite aucune contrainte et de ce fait, il n'y a donc pas de risque de casser la première pièce ou la seconde pièce. De plus, cette coulée avec un retrait de solidification très faible a pour conséquence que le joint 4 ne se déforme pas lors du refroidissement. Le joint 4 n'est donc pas fragilisé et ne détériore pas la longévité du dispositif 1.

Bien entendu, ce premier mode de réalisation n'est pas limité à l'assemblage des palettes d'une ancre et peut aussi être utilisé pour assembler une roue à un axe.

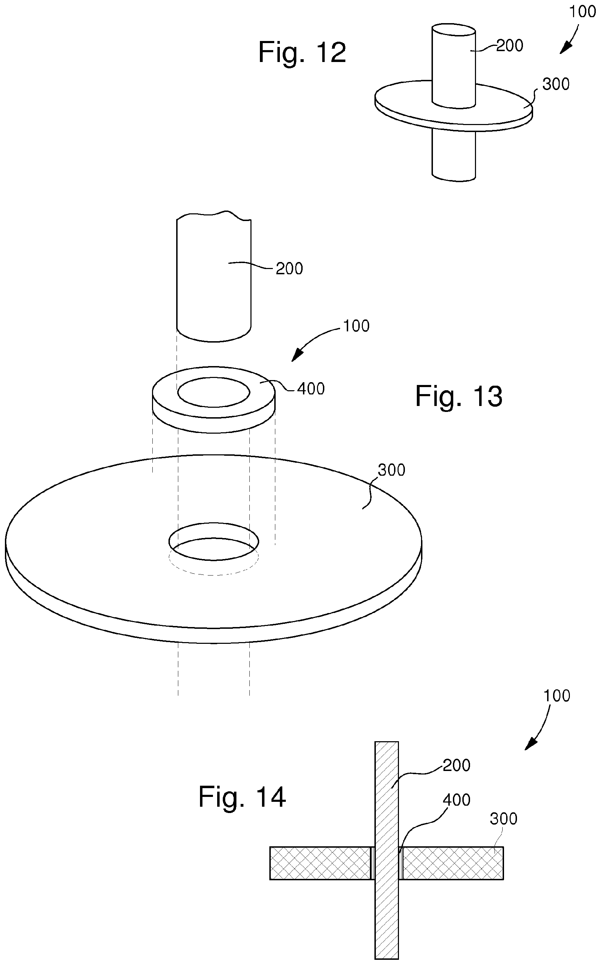

Dans un second mode de réalisation, le procédé de fabrication et d'assemblage, le dispositif 1 utilisé comme exemple comprend un axe 300 et une roue 200 devant être assemblés ensembles. Le procédé de fabrication et d'assemblage comprend une première étape représentée aux figures 12 et 13 consistant à se munir de la première pièce 2 et de la seconde pièce 3 c'est-à-dire respectivement de l'axe 200 et de la roue 300. Cette roue 300 peut être en silicium, céramique ou dans un composite céramique-métal (cermet).

Une seconde étape représentée à la figure 14 consiste à se munir du matériau formant le joint 400. Le joint 400 est alors réalisé en un alliage métallique au moins partiellement amorphe. Pour cela, l'alliage métallique constituant le joint 4 est fabriqué en mélangeant les différents métaux qu'il contient. Puis, ledit alliage est mis en fusion pour être coulé dans un négatif 5 sous la forme d'un moule 50 ayant la forme désirée. Une étape de refroidissement est alors opérée de sorte que ledit alliage en fusion se solidifie. Cette solidification est contrôlée de sorte que l'alliage prenne un état amorphe. Dans le présent cas, la préforme est du type annulaire. L'alliage peut comprendre un élément métallique précieux tel que de l'or, du platine, du palladium, du rhénium, du ruthénium, du rhodium, de l'argent, de l'iridium ou de l'osmium. On comprendra par matériau au moins partiellement amorphe que le matériau est apte à se solidifier au moins partiellement en phase amorphe, c'est-à-dire qu'il est apte à éviter au moins partiellement toute cristallisation. Cette préforme 600 est alors dimensionnée de sorte que son diamètre intérieur soit plus faible que le diamètre intérieur de la roue 300 et que son diamètre extérieur soit compris entre le diamètre intérieur et le diamètre extérieur de la roue 300. Par ailleurs, le diamètre intérieur de la préforme est également plus faible que le diamètre de l'axe 200, ce dernier étant plus faible que le diamètre intérieur de la roue 300.

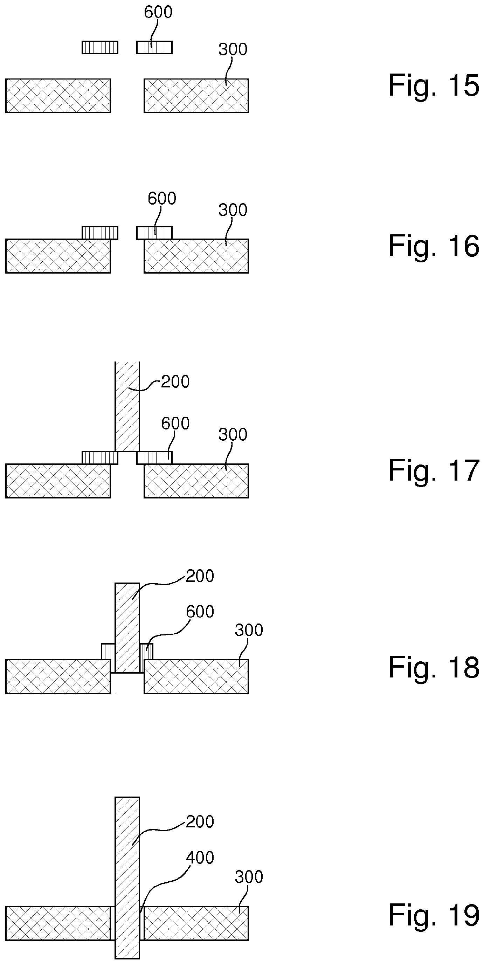

Une troisième étape représentée à la figure 15 consiste à placer la préforme 600 sur la roue 300. Cette préforme 600 est placée au niveau des zones ou l'assemblage entre la roue 300 et l'axe 200 doit être fait.

Une quatrième étape représentée à la figure 16 consiste à chauffer l'ensemble jusqu'à une température comprise entre la température de transition vitreuse et la température de cristallisation du matériau. Dans cet intervalle, ledit matériau voit donc sa viscosité diminuer fortement de sorte qu'il devient facilement déformable pour faciliter sa mise en forme.

Dans une cinquième étape représentée aux figures 17 et 18, l'axe 200 est assemblé à la roue 300. Pour cela, une pression est exercée sur l'axe 200 de sorte que l'assemblage avec la roue 300 se fasse. Cet assemblage entraîne l'application de ladite pression sur la préforme 600 en métal amorphe. En effet, comme le diamètre intérieur de la préforme 600 est plus petit que le diamètre intérieur de la roue 300, le fait d'insérer l'axe 200 dans le diamètre de la roue 300 entraîne un contact entre ledit axe 200 et la préforme 600. Cette dernière subit alors une déformation du fait de l'état visqueux dudit métal amorphe. Cette déformation permet, par adhérence du métal amorphe visqueux avec l'axe 200, audit métal amorphe de s'insérer entre la roue 300 et l'axe 200. On obtient alors un joint en métal amorphe comblant l'interstice entre la roue 300 et l'axe 200 de sorte qu'un maintien entre la roue 300 et l'axe 200 s'opère.

Une fois que le métal amorphe a rempli l'interstice entre la roue 300 et l'axe 200, le tout est refroidi. Le refroidissement est opéré rapidement de sorte que les atomes n'aient pas le temps de se structurer permettant au matériau de rester sous forme amorphe. Cela permet de solidifier le métal amorphe et ainsi figer la solidarisation entre la roue 300 et l'axe 200. On obtient alors le dispositif 100 représenté à la figure 19.

Dans une première variante, il est prévu une étape supplémentaire qui est respectivement la cinquième étape dans le cas du premier mode de réalisation ou la sixième étape dans le cas du second mode de réalisation. Pendant cette étape, les joints 4, 400 en métal amorphe sont cristallisés. Cette cristallisation est réalisée en les montant en température jusqu'à une température comprise entre la température de transition vitreuse Tg et la température de fusion du matériau constitutif des joints puis en refroidissant ledit matériau constitutif des joints 4, 400. Cette cristallisation permet de figer la position des deux pièces 2, 3, 200, 300 l'une par rapport à l'autre. En effet, si cette étape de cristallisation n'est pas faite, il est possible, en chauffant lesdits joints 4, 400 jusqu'à une température comprise entre la température de transition vitreuse Tg et la température de cristallisation Tx du matériau constitutif desdits joints 4, 400 de le rendre à nouveau visqueux. Il est alors possible de modifier la position de la première pièce 2, 200 et/ou de la seconde pièce 3, 300 avant de refroidir rapidement lesdits joints 4, 400 afin qu'il reste amorphe. Il est également possible de laisser le matériau constitutif des joints 4, 400 refroidir lentement afin de figer la position juste après le réglage.

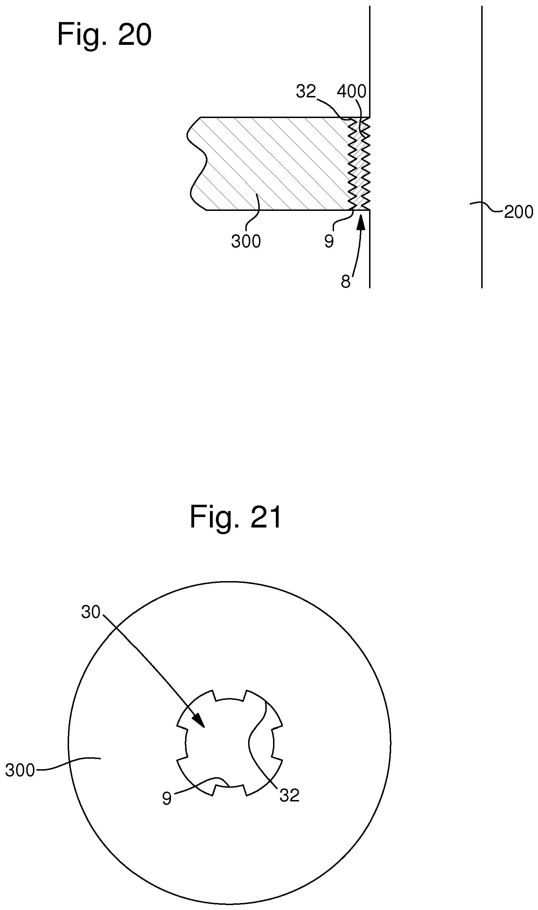

Dans une seconde variante, il est prévu d'augmenter la fixation entre la première pièce 2, 200 et la seconde pièce 3, 300 comme par exemple entre la roue 300 et l'axe 200. Pour cela, des moyens d'accrochage 8 sont agencés au niveau de la tranche intérieure 32 du trou traversant 30 de la roue 300 comme visible aux figures 20 et 21. Néanmoins, la première pièce 2, 200 ou la seconde pièce 3, 300 peuvent présenter ces reliefs 9. Ces moyens d'accrochage, agencés au niveau de l'interface entre la seconde pièce et la première pièce se présentent sous la forme de reliefs 9 situés sur la tranche intérieure du trou traversant 30 de la roue 300 de sorte à améliorer la solidarisation. Ces reliefs 9 se présentent sous la forme de saillies ou d'évidements. L'amélioration de la fixation vient de l'association de ces reliefs 9 avec les caractéristiques du métal amorphe qui voit sa viscosité diminuer fortement de sorte qu'il devient facilement manipulable lorsqu'il est chauffé jusqu'à une température comprise entre sa température de transition vitreuse et sa température de cristallisation. Cela lui permet de prendre précisément la forme des reliefs 9 lors de la mise en forme. Ces reliefs 9 permettent ainsi un maintien radial et axial de sorte que la roue 300 fixée à l'axe 200 ne puisse plus bouger.

On comprendra que diverses modifications et/ou améliorations et/ou combinaisons évidentes pour l'homme du métier peuvent être apportées aux différents modes de réalisation de l'invention exposée ci-dessus sans sortir du cadre de l'invention défini par les revendications annexées.

On comprendra que cela soit la roue 300 et/ou l'axe 200 qui comprennent les reliefs 9.

## Revendications

1. Procédé d'assemblage d'un dispositif comprenant une première pièce (2) et au moins une seconde pièce (3), ladite première pièce et ladite au moins une seconde pièce (3) étant agencées pour pourvoir s'assembler, **caractérisé en ce que** ledit procédé comprend en outre les étapes suivantes :
- se munir de la première et de la au moins une seconde pièce, au moins l'une ou l'autre des premières ou secondes pièces étant réalisée dans un matériau n'ayant pas de domaine plastique;
- assembler ladite au moins une seconde pièce (3) et ladite première pièce (2) comme prévu par leur agencement de sorte qu'un interstice (24) s'étendant sur toute l'interface entre la première pièce et la seconde pièce soit présent entre ladite au moins une seconde pièce et ladite première pièce;
- se munir d'un alliage métallique choisi apte à devenir au moins partiellement amorphe;
- mettre en forme ledit alliage métallique de sorte qu'il remplisse l'interstice (24) entre ladite au moins une seconde pièce et ladite première pièce afin de les solidariser et ainsi former ledit dispositif (1), ledit alliage métallique ayant subi au plus tard au moment de ladite étape de mise en forme un traitement lui permettant de devenir au moins partiellement amorphe.

2. Procédé selon la revendication 1, **caractérisé en ce que**, pendant ledit traitement, ledit alliage métallique est soumis à une montée en température au dessus de sa température de fusion lui permettant de perdre localement toute structure cristalline, ladite montée étant suivie d'un refroidissement à une température inférieure à sa température de transition vitreuse permettant audit matériau de devenir au moins partiellement amorphe.

3. Procédé selon les revendications 1 ou 2, **caractérisé en ce que** l'étape de mise en forme consiste à mettre en forme ledit alliage métallique seulement après l'avoir au préalable transformé en une préforme (6) au moins partiellement amorphe, ladite préforme étant ensuite soumise à une température comprise entre la température de transition vitreuse et la température de cristallisation dudit alliage métallique puis à une opération de formage par pression suivie d'une opération de refroidissement permettant audit alliage métallique de garder une nature au moins partiellement amorphe.

4. Procédé selon la revendication 2, **caractérisé en ce que** l'étape de mise en forme est simultanée avec ledit traitement rendant ledit alliage métallique au moins partiellement amorphe, lors d'une opération de coulée.

5. Procédé d'assemblage selon la revendication 3, **caractérisé en ce que** ledit procédé comprend les étapes suivantes :
- transformer ledit alliage métallique de sorte à obtenir une préforme (600) au moins partiellement amorphe ;
- placer ladite préforme sur ladite première pièce ;
- chauffer ladite préforme jusqu'à une température comprise entre la température de transition vitreuse et la température de cristallisation dudit alliage métallique;
- assembler ladite au moins une seconde pièce (3) et ladite première pièce (2) de sorte que, ladite au moins une seconde pièce exerce une pression sur la préforme afin que celle-ci remplisse l'interstice s'étendant sur toute l'interface entre la première pièce et la seconde pièce créé entre ladite au moins une seconde pièce et ladite première pièce lors de ladite étape d'assemblage, et que ladite au moins une seconde pièce et ladite première pièce soient solidarisées entre elles formant ainsi ledit dispositif.

6. Procédé selon l'une des revendications précédentes, **caractérisé en ce qu'**il comprend en outre une étape de cristallisation dudit matériau consistant à chauffer ledit alliage métallique à une température comprise entre sa température de transition vitreuse et sa température de fusion suivi d'un refroidissement permettant la structuration cristalline dudit matériau.

7. Procédé selon l'une des revendications précédentes, **caractérisé en ce que** la première pièce (2, 200) est réalisée dans un matériau qui n'a pas de domaine plastique exploitable.

8. Procédé selon l'une des revendications précédentes, **caractérisé en ce que** la seconde pièce (3, 300) est réalisée dans un matériau qui n'a pas de domaine plastique exploitable.

9. Procédé selon l'une des revendications précédentes, **caractérisé en ce que** la première pièce (2, 200) et la seconde pièce (3, 300) sont réalisées dans un matériau qui n'a pas de domaine plastique exploitable.

10. Procédé selon l'une des revendications précédentes, **caractérisé en ce que** ledit alliage métallique est totalement amorphe.

11. Procédé selon l'une des revendications précédentes, **caractérisé en ce que** ledit alliage métallique comprend au moins un élément métallique précieux et choisi dans le groupe formé par l'or, le platine, le palladium, le rhénium, le ruthénium, le rhodium, l'argent, l'iridium ou l'osmium.

12. Procédé selon l'une des revendications précédentes, **caractérisé en ce que** ladite première pièce (2, 200) ou ladite au moins une seconde pièce (3, 300) comprend des reliefs (9) de sorte à améliorer la solidarisation entre ladite première pièce et ladite au moins une seconde pièce.

13. Procédé selon l'une des revendications précédentes, **caractérisé en ce que** ladite première pièce et ladite au moins une seconde pièce comprend des reliefs (9) de sorte à améliorer la solidarisation entre ladite première pièce et ladite au moins une seconde pièce.

14. Procédé selon l'une des revendications précédentes, **caractérisé en ce que** ladite première pièce (2) est une ancre et **en ce que** ladite au moins une seconde pièce (3) est une palette.

15. Procédé selon l'une des revendications 1 à 13, **caractérisé en ce que** ladite première pièce (300) est une roue et **en ce que** ladite au moins une seconde pièce (200) est un axe.

16. Procédé selon la revendication 15, **caractérisé en ce que** la roue (300) est en silicium

17. Procédé selon la revendication 15, **caractérisé en ce que** la roue (300) est en céramique.

18. Procédé selon la revendication 15, **caractérisé en ce que** la roue (300) est en composite céramique-métal (cermet).

## Patentansprüche

1. Verfahren zur Montage einer Vorrichtung, umfassend ein erstes Teil (2) und mindestens ein zweites Teil (3), wobei das erste Teil und das mindestens eine zweite Teil (3) dafür angeordnet sind, zusammengefügt werden zu können, **dadurch gekennzeichnet, dass** das Verfahren ferner die folgenden Schritte umfasst:
- Bereitstellen des ersten und des mindestens einen zweiten Teils, wobei mindestens das eine oder das andere der ersten und zweiten Teile aus einem Material hergestellt ist, das keinen Plastikbereich aufweist;
- Zusammenbau des mindestens einen zweiten Teils (3) und des ersten Teils (2) wie durch ihre Anordnung vorgesehen, derart, dass zwischen dem mindestens einen zweiten Teil und dem ersten Teil ein Zwischenraum (24) vorhanden ist, der sich über die gesamte Bindestelle zwischen dem ersten Teil und dem zweiten Teil erstreckt;
- Bereitstellen einer Metalllegierung, die so ausgewählt ist, dass sie mindestens teilweise amorph werden kann;
- Formen der Metalllegierung, so dass sie den Zwischenraum (24) zwischen dem mindestens einen zweiten Teil und dem ersten Teil füllt, um sie aneinander zu befestigen und somit die Vorrichtung (1) zu bilden, wobei die Metalllegierung nach dem Formungsschritt einer Verarbeitung unterworfen wird, die ihr ermöglicht, mindestens teilweise amorph zu werden.

2. Verfahren nach Anspruch 1, **dadurch gekennzeichnet, dass** während der Verarbeitung die Metalllegierung einem Temperaturanstieg über ihre Schmelztemperatur unterworfen wird, was ihr ermöglicht, lokal jede kristalline Struktur zu verlieren, wobei dem Anstieg eine Abkühlung auf eine Temperatur unterhalb ihrer Glasübergangstemperatur folgt, was dem Material ermöglicht, mindestens teilweise amorph zu werden.

3. Verfahren nach Anspruch 1 oder 2, **dadurch gekennzeichnet, dass** der Formungsschritt darin besteht, die Metalllegierung ausschließlich dann zu formen, wenn sie vorher in einen mindestens teilweise amorphen Vorformling (6) umgewandelt wurde, wobei der Vorformling anschließend einer Temperatur unterworfen wird, die zwischen der Glasübergangstemperatur und der Kristallisationstemperatur der Metalllegierung liegt, und dann einem Druckformungsvorgang unterworfen wird, gefolgt von einem Abkühlungsvorgang, der der Metalllegierung ermöglicht, eine mindestens teilweise amorphe Natur beizubehalten.

4. Verfahren nach Anspruch 2, **dadurch gekennzeichnet, dass** der Formungsschritt gleichzeitig mit der Verarbeitung, die die Metalllegierung mindestens teilweise amorph macht, in einem Gießvorgang erfolgt.

5. Montageverfahren nach Anspruch 3, **dadurch gekennzeichnet, dass** das Verfahren die folgenden Schritte umfasst:
- Umwandeln der Metalllegierung, um einen mindestens teilweise amorphen Vorformling (600) zu erhalten;
- Anordnen des Vorformlings auf dem ersten Teil;
- Erwärmen des Vorformlings bis auf eine Temperatur, die zwischen der Glasübergangstemperatur und der Kristallisationstemperatur der Metalllegierung liegt;
- Zusammenbau des mindestens einen zweiten Teils (3) und des ersten Teils (2), so dass das mindestens eine zweite Teil einen Druck auf den Vorformling ausübt, damit dieser den Zwischenraum füllt, der sich über die gesamte Bindestelle zwischen dem ersten Teil und dem zweiten Teil erstreckt, die zwischen dem mindestens einen zweiten Teil und dem ersten Teil während des Zusammenbauschrittes erzeugt wird, und dass das mindestens eine zweite Teil und das erste Teil aneinander befestigt werden und dadurch die Vorrichtung bilden.

6. Verfahren nach einem der vorhergehenden Ansprüche, **dadurch gekennzeichnet, dass** es ferner einen Schritt des Kristallisierens des Materials umfasst, der darin besteht, die Metalllegierung auf eine Temperatur zwischen ihrer Glasübergangstemperatur und ihrer Schmelztemperatur zu erwärmen, gefolgt von einer Abkühlung, die die kristalline Strukturierung des Materials ermöglicht.

7. Verfahren nach einem der vorhergehenden Ansprüche, **dadurch gekennzeichnet, dass** das erste Teil (2, 200) aus einem Material hergestellt ist, das keinen verwertbaren Plastikbereich aufweist.

8. Verfahren nach einem der vorhergehenden Ansprüche, **dadurch gekennzeichnet, dass** das zweite Teil (3, 300) aus einem Material hergestellt ist, das keinen verwertbaren Plastikbereich aufweist.

9. Verfahren nach einem der vorhergehenden Ansprüche, **dadurch gekennzeichnet, dass** das erste Teil (2, 200) und das zweite Teil (3, 300) aus einem Material hergestellt sind, das keinen verwertbaren Plastikbereich aufweist.

10. Verfahren nach einem der vorhergehenden Ansprüche, **dadurch gekennzeichnet, dass** die Metalllegierung vollständig amorph ist.

11. Verfahren nach einem der vorhergehenden Ansprüche, **dadurch gekennzeichnet, dass** die Metalllegierung mindestens ein Edelmetallelement enthält und aus der Gruppe ausgewählt ist, die durch Gold, Platin, Palladium, Rhenium, Ruthenium, Rhodium, Silber, Iridium oder Osmium gebildet ist.

12. Verfahren nach einem der vorhergehenden Ansprüche, **dadurch gekennzeichnet, dass** das erste Teil (2, 200) oder das mindestens eine zweite Teil (3, 300) Reliefs (9) aufweist, wodurch die Befestigung zwischen dem ersten Teil und dem mindestens einen zweiten Teil verbessert wird.

13. Verfahren nach einem der vorhergehenden Ansprüche, **dadurch gekennzeichnet, dass** das erste Teil und das mindestens eine zweite Teil Reliefs (9) aufweist, wodurch die Befestigung zwischen dem ersten Teil und dem mindestens einen zweiten Teil verbessert wird.

14. Verfahren nach einem der vorhergehenden Ansprüche, **dadurch gekennzeichnet, dass** das erste Teil (2) ein Anker ist und dass das mindestens eine zweite Teil (3) eine Palette ist.

15. Verfahren nach einem der Ansprüche 1 bis 13, **dadurch gekennzeichnet, dass** das erste Teil (300) ein Rad ist und dass das mindestens eine zweite Teil (200) eine Achse ist.

16. Verfahren nach Anspruch 15, **dadurch gekennzeichnet, dass** das Rad (300) aus Silicium hergestellt ist.

17. Verfahren nach Anspruch 15, **dadurch gekennzeichnet, dass** das Rad (300) aus Keramik hergestellt ist.

18. Verfahren Anspruch 15, **dadurch gekennzeichnet, dass** das Rad (300) aus einem Keramik-Metall-Verbund (Cermet) hergestellt ist.

## Claims

1. Method of assembling a device comprising a first part (2) and at least a second part (3), said first part and said at least one second part (3) being arranged to allow assembly to each other, **characterised in that** said method further includes the following steps:
- taking the first part and the at least one second part, at least one or the other of the first or second parts being made of a material having no plastic range;
- assembling said at least one second part (3) and said first part (2) as provided by the arrangement thereof so that a gap (24) extending over the entire interface between the first part and the second part is present between said at least one second part and said first part,
- taking a metal alloy, chosen for its ability to become at least partially amorphous;
- shaping said metal alloy so that it fills the gap (24) between said at least one second part and said first part so as to join them and thereby form said device (1), said metal alloy having been subject to a treatment allowing said alloy to become at least partially amorphous, at the latest at the time of said shaping operation.

2. Method according to claim 1, **characterised in that**, during said treatment, said metal alloy is subject to a temperature increase above the melting temperature thereof causing said alloy to lose any local crystalline structure, said increase being followed by cooling to a lower temperature than the vitreous transition temperature thereof allowing said material to become at least partially amorphous.

3. Method according to claims 1 or 2, **characterised in that** the shaping step consists in shaping said metal alloy only after having previously transformed said alloy into an at least partially amorphous preform (6), said preform being then subject to a temperature comprised between the vitreous transition temperature and the crystallisation temperature of said metal alloy and then to a pressure working operation, followed by a cooling operation allowing said metal alloy to preserve an at least partially amorphous nature.

4. Method according to claim 2, **characterised in that** the shaping step is simultaneous with said treatment which makes said metal alloy at least partially amorphous, during a casting operation.

5. Assembly method according to claim 3, **characterised in that** said method comprises the following steps:
- transforming said metal alloy so as to obtain an at least partially amorphous preform (600);
- placing said preform on said first part;
- heating said preform to a temperature comprised between the vitreous transition temperature and the crystallisation temperature of said metal alloy;
- assembling said at least one second part (3) and said first part (2) so that said at least one second part exerts pressure on the preform so that said preform fills the gap created between said at least one second part and said first part during said assembling step, and so that said at least one second part and said first part are joined to each other thereby forming said device.

6. Method according to one of the preceding claims, **characterised in that** it further includes a step of crystallising said material, consisting in heating said metal alloy to a temperature comprised between the vitreous transition temperature thereof and the melting temperature thereof, followed by cooling to allow the crystalline structuring of said material.

7. Method according to one of the preceding claims, **characterised in that** the first part (2, 200) is made of a material which has no usable plastic range.

8. Method according to one of the preceding claims, **characterised in that** the second part (3, 300) is made of a material which has no usable plastic range.

9. Method according to one of the preceding claims, **characterised in that** the first part (2, 200) and second part (3, 300) are made of a material which has no usable plastic range.

10. Method according to one of the preceding claims, **characterised in that** said metal alloy is completely amorphous.

11. Method according to one of the preceding claims, **characterised in that** said metal alloy includes at least one precious metal element and is selected from the group comprising gold, platinum, palladium, rhenium, ruthenium, rhodium, silver, iridium or osmium.

12. Method according to one of the preceding claims, **characterised in that** said first part (2, 200) or said at least one second part (3, 300) includes portions in relief (9) so as to improve the attachment between said first part and said at least one second part.

13. Method according to one of the preceding claims, **characterised in that** said first part and said at least one second part include portions in relief (9) so as to improve the attachment between said first part and said at least one second part.

14. Method according to one of the preceding claims, **characterised in that** said first part (2) is a pallet lever and said at least one second part (3) is a pallet stone.

15. Method according to one of claims 1 to 13, **characterised in that** said first part (300) is a wheel and said at least one second part (200) is an arbor.

16. Method according to claim 15, **characterised in that** the wheel (300) is made of silicon.

17. Method according to claim 15, **characterised in that** the wheel (300) is made of ceramic material.

18. Method according to claim 15, **characterised in that** the wheel (300) is made of ceramic-metal composite (cermet).
